# EUROPEAN PATENT APPLICATION

(11) **EP 4 321 902 A1**
(43) Date of publication of application: **14.02.2024**
(21) Application number: 22783822.4
(22) Date of filing: 03.03.2022
(51) Int. Cl.: G01S 17/08, G01C 5/00

(54) **LASER RECEIVING APPARATUS**

(30) Priority: 09.04.2021 CN 202120725023 U
(71) Applicant: Changzhou Huada Kejie Opto-Electro Instrument Co., Ltd., Changzhou, Jiangsu 213023 (CN)
(72) Inventor: ZHANG, Ou, hangzhou, Jiangsu 213023 (CN); ZHU, Weiping, hangzhou, Jiangsu 213023 (CN)
(74) Representative: Lambsdorff & Lange Patentanwälte Partnerschaft mbB
(86) International application number: PCT/CN2022/079065
(87) International publication number: WO 2022/213752

(57) **Abstract**

A purpose of the utility model is to provide a laser receiving device, which comprises a photoelectric sensor, a main control board and a display module, wherein both the photoelectric sensor and the display module are connected with the main control board; the laser receiving device further comprises a laser ranging module; and the laser ranging module is connected with the main control board. By configuring the laser ranging module in the laser receiving device, a problem of complex operation due to the fact that receivers on the market must be matched with a telemeter rod at present is solved.

## Description

### TECHNICAL FIELD

The utility model relates to the field of laser ranging, in particular to a laser receiving device.

### BACKGROUND

Generally, laser beams cannot be observed with naked eyes in building surveying, especially in surveying large areas or outdoor scenes, particularly when the surrounding interference light is strong. At this time, a receiver is necessary to detect the laser beams to acquire position information of the laser beams in real time, which is widely applied in the field of building surveying. However, receivers on the market must be matched with a telemeter rod for reading at present, which requires a large number of manual operations, thereby not only being complex and inconvenient to operate, but also affecting the accuracy of readings. In addition, the height of the telemeter rod will also affect the position and mode of setting-out, thereby greatly increasing the complexity of surveying operation.

### SUMMARY

To overcome the above technical defects, a purpose of the utility model is to provide a laser receiving device; and by configuring a laser ranging module in the laser receiving device, a problem of complex operation due to the fact that receivers on the market must be matched with a telemeter rod at present is solved.

The utility model discloses a laser receiving device, which comprises a photoelectric sensor, a main control board and a display module, wherein both the photoelectric sensor and the display module are connected with the main control board; the laser receiving device further comprises a laser ranging module; and the laser ranging module is connected with the main control board.

Preferably, in the laser receiving device, the photoelectric sensor comprises at least two photoelectric sensing units; and the photoelectric sensing units are arranged in a column in a vertical direction of the laser receiving device and both connected with the main control board.

Preferably, the laser receiving device further comprises an angle sensor; and the angle sensor is connected with the main control board.

Preferably, the laser receiving device further comprises a Bluetooth module; and the Bluetooth module is connected with the main control board.

Preferably, the laser receiving device further comprises an audio playing module; and the audio playing module is connected with the main control board.

Preferably, the laser receiving device further comprises a battery; and the battery is connected with the main control board for supplying power to the laser receiving device.

Preferably, the laser receiving device further comprises a housing; and each electronic component of the laser receiving device according to any one of the above is arranged in a protection space formed by the housing.

Preferably, the laser receiving device further comprises a button; an upper portion of the button is exposed outside the housing and connected with the main control board for controlling switching between a laser receiving mode and a laser ranging mode.

After the above technical scheme is adopted, compared with the prior art, its beneficial effect lies in:
1. The distance between the laser receiving device and the ground, ceiling, etc. can be measured without additional telemeter rod;
2. The distance between the laser beams and a reference position of the laser receiving device can be measured by means of information such as the arrangement mode and size of the photoelectric sensors;
3. The angle sensing module is built in to measure at various inclination angles and ensure the measurement accuracy;
4. The Bluetooth module is built in to transmit various measured data to external electronic equipment;
5. The button is provided to realize switching between the laser receiving mode and a height measurement mode.

### BRIEF DESCRIPTION OF THE DRAWINGS

FIG. 1 is a structural schematic diagram of a laser receiving device according to a preferred embodiment of the utility model;
FIG. 2 is a schematic diagram of operating principles of a photoelectric sensor of the laser receiving device according to a preferred embodiment of the utility model.

### DETAILED DESCRIPTION

The advantages of the present utility model are further described below with reference to the drawings and specific embodiments.

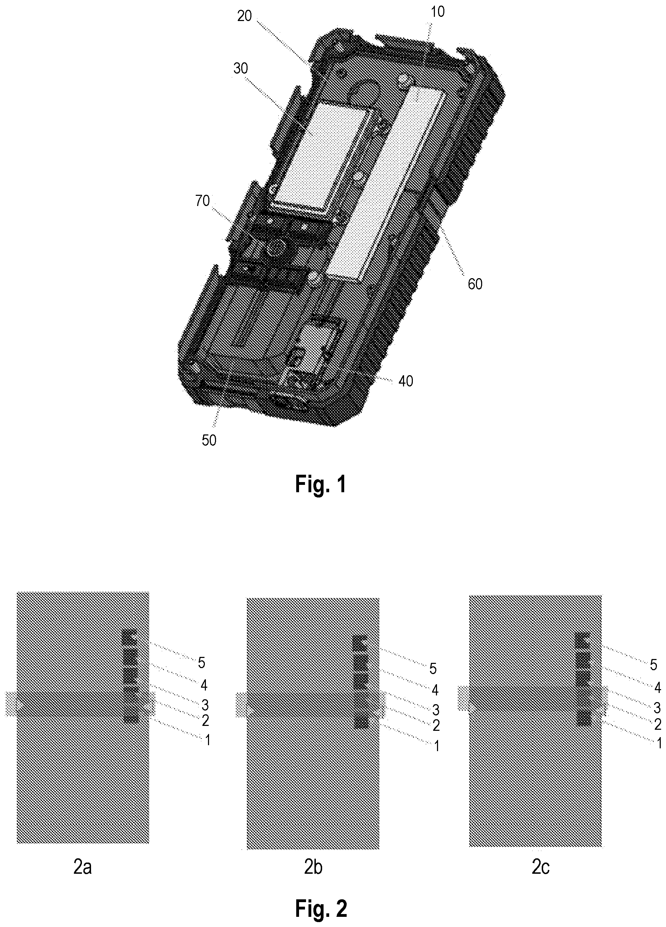

Referring to FIG. 1, which is a structural schematic diagram of a laser receiving device according to an embodiment of the utility model, it can be seen that the laser receiving device provided in the present embodiment includes a photoelectric sensor 10, a main control board 20, a display module 30 and a laser ranging module 40. Wherein the photoelectric sensor 10, the display module 30 and the laser ranging module 40 are all connected with the main control board 20. It should be understood that the term "connect" mentioned in the present embodiment and other contents herein includes electrical connection, communication connection and/or other connection modes capable of transmitting electric energy or communication information between the main control board 20 and various electronic components including but not limited to the photoelectric sensor 10, the display module 30 and the laser ranging module 40. Therefore, the operation of the photoelectric sensor 10, the display module 30 and the laser ranging module 40 can be controlled by the main control board 20.

The laser receiving device provided in the present embodiment not only can receive a laser beam emitted by an external laser emitting device such as a laser rangefinder or swinger by the photoelectric sensor; the photoelectric sensor sends signals of the received laser beam to the main control board; the main control board judges position information of the laser beam according to the signals, for example, the distance or position between the laser beam and the reference position of the laser receiving device, and displays the information with the aid of the display module, so that a user can learn about the relative position relationship between the current laser beam and the laser receiving device through the display module of the laser receiving device, and accurately locate the laser receiving device on a laser reference plane provided by the laser rangefinder or swinger by adjusting the position of the laser receiving device. In addition, the laser receiving device provided by the present embodiment can also measure a height of the laser receiving device from the ceiling or the ground by using the laser ranging module, i.e., a distance between the laser receiving device and an object above or an object below in the vertical direction of the laser receiving device, and send the distance information to the main control board, so that the main control board displays the information with the display module for the user to understand. Thus, the user can judge whether there is a horizontal height difference between the object above or the object below of the laser receiving device according to the distance between the laser receiving device and the object above or the object below in the vertical direction of the laser receiving device.

In another preferred embodiment of the utility model based on the above embodiment, the photoelectric sensor includes at least two photoelectric sensing units; and the photoelectric sensing units are arranged in a column in a vertical direction of the laser receiving device and both connected with the main control board.

Based on the above arrangement, relative positions of the laser beams can be determined by utilizing difference of the laser beams received by different photoelectric sensors. For example, as shown in FIG. 2, if positions of the laser beams received by the laser receiving device are different, strengths of electrical signals sensed by the photoelectric sensors located above and below each other will be different, so that the relative positions of the laser beams can be obtained according to the electrical signals. When final strengths of the electrical signals sensed by the photoelectric sensors located above and below are the same, it is determined that the direction in which the laser beam enters the laser receiving device is a reference position of the laser receiving device. In addition, since the photoelectric sensors are arranged in an array and the size of each photoelectric sensor is constant, for example, the size can be 3 *3 mm, the value of distance between the laser beam and the reference position can be judged according to the difference principle. As shown in FIG. 2a, when the electrical signals sensed by photoelectric sensors 1 and 2 are equal, the main control board generates data information 0 according to the information. As shown in FIG. 2b, when the electrical signal sensed by the photoelectric sensor 2 is twice the electrical signal sensed by the photoelectric sensor 1, the main control board generates data information +1 according to the information. As shown in FIG. 2c, when the electrical signal sensed by the photoelectric sensor 1 is equal to that sensed by a photoelectric sensor 3, the main control board generates data information +2 according to the information. Therefore, the main control board can obtain the value of distance between the laser beam and the reference position according to the data information and the sizes of the photoelectric sensors.

In another preferred embodiment of the utility model based on the above embodiment, an angle sensor is further arranged in the laser receiving device; and the angle sensor is connected with the main control board. It can be understood that in order to facilitate the operation, most of the laser receiving devices are handheld for use. In this case, it is difficult for the laser receiving device to be absolutely horizontal, or an operator needs to constantly repeat the leveling to ensure the operating accuracy of the laser receiving device. However, in the present embodiment, the angle sensor is configured in the laser receiving device to read an inclination angle of the laser receiving device, so that the accuracy of the laser position judged by the laser receiving device and the distance measured by the laser ranging module in the laser receiving device can be ensured. Furthermore, the main control board can control a display direction of obtained data such as the value of distance between the laser beam and the reference position and the value of distance between the laser receiving device and the ground or ceiling according to the inclination angle of the laser receiving device read by the angle sensor, thereby facilitating the operator to view. For example, when the laser receiving device rotates 180°, the data displayed on the display module also rotate 180°.

In another preferred embodiment of the utility model based on the above embodiment, a Bluetooth module is further arranged in the laser receiving device; the Bluetooth module is connected with the main control board, so that the main control board can establish communication connection with external electronic equipment such as smartphones, iPADs and computers by means of the Bluetooth module, thereby transmitting data information measured by the laser receiving device to the external electronic equipment or displaying the data information on the external electronic equipment.

In another preferred embodiment of the utility model based on the above embodiment, an audio playing module is further arranged in the laser receiving device; and the audio playing module is also connected with the main control board. The main control board can control the audio playing module to play corresponding warning audio according to preset rules when certain specific events occur. For example, when it is captured that the laser beam enters the laser receiving device, a warning audio of beep is emitted; and when it is captured that the laser beam deviates from the reference position, a warning audio of keeping beeping is emitted to prompt the operator to complete the modulation of the laser receiving device without viewing or viewing the display screen all the time, thereby satisfying the measurement requirements.

Still referring to FIG. 1, in another preferred embodiment of the utility model based on the above embodiment, a battery 50 is further arranged in the laser receiving device; and the battery 50 is connected with the main control board 20 for supplying power to the laser receiving device. Therefore, the laser receiving device can be conveniently used without connecting with an external fixed power supply.

Still referring to FIG. 1, in another preferred embodiment of the utility model based on the above embodiment, the laser receiving device further includes a housing 60; and the housing 60 forms a relatively sealed protection space, so that each electronic component in the above embodiments can be protected in such a protection space.

Still referring to FIG. 1, in another preferred embodiment of the utility model based on the above embodiment, the laser receiving device further includes a button 70; an upper part of the button 70 should be exposed outside the housing 60 and connected with the main control board 20, so that the button 70 is touched to send a signal to the main control board 20, and then the main control board 20 controls the laser receiving device to realize switching between a laser receiving mode and a laser ranging mode, thereby avoiding mutual interference when the two modes work simultaneously.

In conclusion, the laser receiving device provided by the utility model can measure the distance between the laser receiving device and the ground, ceiling, etc. without additional telemeter rod; the distance between the laser beams and a reference position of the laser receiving device can be measured by means of information such as the arrangement mode and size of the photoelectric sensors; the angle sensing module is built in to measure at various inclination angles and ensure the measurement accuracy; the Bluetooth module is built in to transmit various measured data to the external electronic equipment; and the button is provided to realize switching between the laser receiving mode and a height measurement mode.

It should be noted that the embodiments of utility model have better implementation, and do not limit the utility model in any form. Any person skilled in the art may change or modify the technical content disclosed above into an equivalent effective embodiment without deviating from the content of the technical scheme of embodiment. Any modification or equivalent change and modification made to the above embodiments according to the technical essence of the utility model still belongs to the scope of the technical scheme of the utility model.

## Claims

1. A laser receiving device, comprising a photoelectric sensor, a main control board and a display module, wherein
both the photoelectric sensor and the display module are connected with the main control board, wherein
the laser receiving device further comprises a laser ranging module; and the laser ranging module is connected with the main control board.

2. The laser receiving device according to claim 1, wherein the photoelectric sensor comprises at least two photoelectric sensing units; and the photoelectric sensing units are arranged in a column in a vertical direction of the laser receiving device and both connected with the main control board.

3. The laser receiving device according to claim 1, wherein, further comprising an angle sensor, the angle sensor is connected with the main control board.

4. The laser receiving device according to claim 1, wherein, further comprising a Bluetooth module, the Bluetooth module is connected with the main control board.

5. The laser receiving device according to claim 1, wherein, further comprising an audio playing module, the audio playing module is connected with the main control board.

6. The laser receiving device according to claim 1, wherein, further comprising a battery, the battery is connected with the main control board for supplying power to the laser receiving device.

7. The laser receiving device according to any one of claims 1 to 6, wherein, further comprising a housing, each electronic component of the laser receiving device according to any one of claims 1 to 6 is arranged in a protection space formed by the housing.

8. The laser receiving device of claim 7, wherein, further comprising a button, an upper portion of the button is exposed outside the housing and connected with the main control board for controlling switching between a laser receiving mode and a laser ranging mode.
